(19) Europäisches Patentamt
European Patent Office
Office européen des brevets

(11) Veröffentlichungsnummer: **0 348 776**
**A2**

(12) **EUROPÄISCHE PATENTANMELDUNG**

(21) Anmeldenummer: **89111068.6**

(22) Anmeldetag: **19.06.89**

(51) Int. Cl.4: **C08G 8/36 , C08G 8/18 , B01F 17/00 , C08G 8/28**

(30) Priorität: **30.06.88 DE 3822043**

(43) Veröffentlichungstag der Anmeldung: **03.01.90 Patentblatt 90/01**

(84) Benannte Vertragsstaaten: **CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Uhrig, Heinz**
**Feldergstrasse 59**
**D-6374 Steinbach(DE)**
Erfinder: **Ackermann, Erich, Dr.**
**Burgweg 7**
**D-6233 Kelkheim (Taunus)(DE)**
Erfinder: **Sieber, Alexander, Dr.**
**Wartburgstrasse 76**
**D-6230 Frankfurt am Main 80(DE)**

(54) **Grenzflächenaktive Verbindungen auf Basis von Hydroxynaphthoesäureestern, ihre Herstellung und Verwendung.**

(57) Die ständig zunehmenden Anforderungen an Dispergier-, Emulgier- und Präparationsmittel, insbesondere bei der Herstellung von Azofarbstoffen und -pigmenten bzw. bei der Herstellung von Farbstoff- und Pigmentdispersionen, machte die Entwicklung neuer grenzflächenaktiver Verbindungen notwendig.

Erfindungsgemäß konnten durch Veresterung von Hydroxynaphthalincarbonsäuren (am Carboxyl) mit Fettalkoholen bzw. bevorzugt mit Oxalkylaten von Fettsäuren, Harzsäuren bzw. Alkylphenolen, Kondensation des gebildeten Veresterungsproduktes mit Aldehyden zu Novolakharzen mit anschließender Oxalkylierung sowie Veresterung der endständigen OH-Gruppen mit Harzsäuren, Fettsäuren, aromatischen Carbonsäuren bzw. Oxycarbonsäuren und gegebenenfalls Umsetzung mit Phthalsäureanhydrid bzw. Maleinsäureanhydrid und Sulfit neue polyfunktionelle Tensidstrukturen entwickelt werden, die für die verschiedensten Anwendungsbereiche auf dem Dispergier- und Emulgiergebiet besonders für die Herstellung und Präparierung von Azopigmenten sehr gut geeignet sind.

EP 0 348 776 A2

Xerox Copy Centre

# Grenzflächenaktive Verbindungen auf Basis von Hydroxynaphthoesäureestern, ihre Herstellung und Verwendung

Die Erfindung betrifft das Gebiet grenzflächenaktiver Mittel. Gegenstand der Erfindung sind Verbindungen der allgemeinen Formel (I)

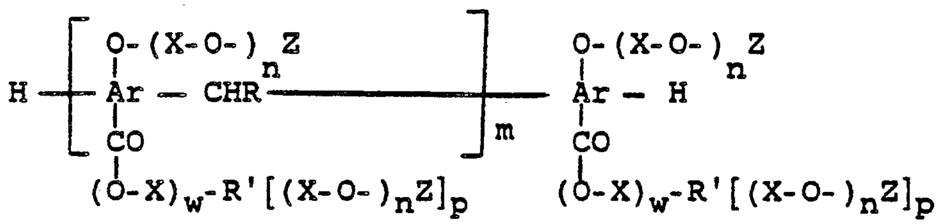

(I),

worin

Ar Naphthalin,

X unabhängig voneinander 1,2-Ethylen oder 1,2-Propylen, vorzugsweise 1,2-Ethylen, oder eine Kombination davon,

n und w unabhängig voneinander eine Zahl von 0 bis 200, wobei mindestens eine der Zahlen n und w von 0 verschieden ist,

Z jeweils unabhängig von den übrigen Z ein Wasserstoffatom oder ein anionogener, nichtionogener oder kationogener aliphatischer, cycloaliphatischer, aromatischer, araliphatischer oder arcycloaliphatischer Acylrest mit 1 bis 60 C-Atomen oder eine Gruppe der Formel $-SO_3M$, in der M ein Kation bedeutet,

R unabhängig von den übrigen R ein Wasserstoffatom oder ein Alkylrest mit 1 bis 9 C-Atomen,

$R'$ unabhängig von den übrigen $R'$ ein Amin- bzw. Amid-Stickstoffatom oder ein aliphatischer, cycloaliphatischer oder aromatischer Rest oder eine Kombination aus zwei oder mehreren solcher KW-Reste, wobei der Rest $R'$ insgesamt 1 bis 60 C-Atome hat sowie mit den angrenzenden X und - wenn w = 0 ist - mit der CO-Gruppe über jeweils ein Sauerstoff- oder Amin- bzw. Amid-Stickstoffatom gebunden ist,

p unabhängig von den übrigen p eine Zahl von 0 bis 6 und

m eine Zahl von 0 bis 9

sind.

Im Falle der neuen grenzflächenaktiven Mittel handelt is sich in erster Linie um solche Verbindungen der genannten Formel (I), bei der die Summe (n + w) aller Alkylenoxy-Einheiten pro Naphthalin Ar insgesamt 2 bis 150, vorzugsweise 6 bis 150, beträgt.

Von wesentlichem Interesse sind erfindungsgemäße Verbindungen der Formel (I), in der

Ar Naphthalin,

Z unabhängig voneinander ein Wasserstoffatom oder ein anionogener oder nichtionogener aliphatischer, cycloaliphatischer, aromatischer oder araliphatischer Acylrest mit insgesamt 1 bis 40 C-Atomen, insbesondere 4 bis 20 C-Atomen, oder eine Gruppe der Formel $-SO_3M$, in der M ein Kation bedeutet,

R ein Wasserstoffatom oder ein $C_1$-$C_6$-Alkylrest, vorzugsweise Wasserstoff oder $C_1$-$C_4$-Alkyl, wie Methyl, Ethyl, Propyl oder Butyl, insbesondere Wasserstoff,

$R'$ unabhängig voneinander jeweils ein aliphatischer, cycloaliphatischer, aromatischer, araliphatischer oder arcycloaliphatischer Rest mit 1 bis 40 C-Atomen, der mit den angrenzenden X und - wenn w = 0 ist - mit der CO-Gruppe über ein Sauerstoff- oder Amin- bzw. Amid-Stickstoffatom gebunden ist,

p unabhängig voneinander jeweils 0 bis 3, insbesondere 0 oder 1,

m 0 bis 4,

X 1,2-Ethylen oder 1,2-Propylen, vorzugsweise 1,2-Ethylen und weniger als 50 % der X 1,2-Propylen, und

n unabhängig voneinander jeweils 1 bis 100

sind.

Bevorzugte erfindungsgemäße Verbindungen der Formel (I) enthalten mindestens einen nichtionogenen oder anionogenen Acylrest Z aus der Gruppe entsprechend den folgenden Strukturen

$-CO-R^1$,

$-CO-CH=CH-COOM$,

$-CO-CH_2-CH(SO_3M)-COOM$,

$-CO-C_6H_4-COOM$

$-CO-R^{*}[-COOM]_k$ und

$-SO_3M$,

wobei in den vorstehenden Formeln

$R^1$ für einen gesättigten oder ungesättigten, geradkettigen oder verzweigten Kohlenwasserstoffrest mit 1 bis 19 C-Atomen, der unsubstituiert oder durch eine Hydroxygruppe substituiert ist, vorzugsweise einen geradkettigen, gesättigten oder ungesättigten $C_7$-$C_{19}$-Alkylrest einer Fettsäure oder Hydroxyfettsäure mit 8 bis 20 C-Atomen, oder für einen Phenyl- oder Naphthylrest, der unsubstituiert oder ein- bis drei-fach durch Reste aus der Gruppe von $C_1$-$C_{14}$-Alkyl, Benzyl, Phenylethyl, $C_1$-$C_4$-Alkoxy, $C_1$-$C_4$-Alkanoyl, Carbamoyl, Phenyl, Mono- oder Di-($C_1$-$C_4$-alkyl)-aminocarbonyl und Hydroxyl substituiert ist, oder für einen polycyclischen Kohlenwasserstoffrest einer unmodifizierten oder modifizierten Harzsäure, vorzugsweise einer Harzsäure vom Kolophoniumtyp,

$R^*[-COOM]_k$-CO- für einen Acylrest einer dimerisierten oder trimerisierten Fettsäure auf Basis von $C_{12}$-$C_{20}$-Fettsäuren, wobei $R^*$ den Kohlenwasserstoffteil des Acylrestes bedeutet und k entsprechend 1 oder 2 ist, und

M für jeweils ein Kation, vorzugsweise für $H^+$ oder ein Alkalimetallkation oder ein Äquivalent eines Erdalkalimetallkations oder Ammonium oder ein Ammoniumion, das durch mindestens einen Rest aus der Gruppe $C_1$-$C_4$-Alkyl oder $C_1$-$C_4$-Hydroxyalkyl substituiert ist, oder ein Ammoniumion, das durch Anlagerung von 1 bis 150 Mol- Äquivalenten Ethylenoxid oder Propylenoxid oder eines Gemisches aus beiden Alkylenoxiden an Ammoniak oder an ein Amin, das einem der vorstehend genannten Ammoniumionen entspricht, erhältlich ist,

stehen.

In diesem Zusammenhang werden vor allem Verbindungen der Formel (I) herausgestellt, welche mindestens einen Rest $-R'[(X\text{-}O\text{-})_nZ]_p$ aus der Gruppe entsprechend den folgenden Strukturen

$-O-CO-R^1$,

$-O-R^2$,

$-NR^3-R^2$,

$-NR^3-CO-R^1$,

$-O-CH_2-[CHOR^3-]_qCH_2-O-CO-R^1$,

$-O-CH_2-[CHOR^3-]_qCH_2-O-R^2$,

$-O-CH_2-C[CH_2OR^3]_2-CH_2-O-CO-R^1$,

$-(NR^3-C_iH_{2i}-)_rNR^3-R^2$,

$-NR^3-(X-O-)_nCO-R^1$,

$-O-CO-R^*[-CO(X-O-)_nZ]_k$ und

$-OR^4$

aufweisen, wobei in den vorstehenden Formeln X, Z, n, $R^1$, $R^*$ und k die obengenannten Bedeutungen haben und

$R^2$ für einen gesättigten oder ungesättigten, geradkettigen oder verzweigten Kohlenwasserstoffrest mit 1 bis 20 C-Atomen, vorzugsweise für einen geradkettigen, gesättigten oder ungesättigten $C_8$-$C_{20}$-Alkylrest auf Basis eines Fettalkohols,

$R^3$ für Wasserstoff, $C_1$-$C_4$-Alkyl oder eine Gruppe der Formel $(X\text{-}O)_nZ$ mit der genannten Bedeutung für X, Z und n,

$R^4$ für Phenyl oder Naphthyl, die unsubstituiert oder ein- bis dreifach durch Reste aus der Gruppe von $C_1$-$C_{14}$-Alkyl substituiert sind,

q für 1 bis 4, vorzugsweise 1,

r für 1 bis 6, vorzugsweise 1 oder 2, und

i für 1 bis 6, vorzugsweise 3, stehen.

Als besonders wertvoll sind nach der vorliegenden Erfindung Verbindungen der Typs gemäß Formel (I) einzustufen, in der Z aus der Gruppe entsprechend den folgenden Strukturen H, -CO-CH=CH-COOM, $-CO-CH_2-CH(SO_3M)-COOM$, $-CO-C_6H_4-COOM$, $-CO-C_6H_5$ sowie dem Acylrest der Dehydroabietinsäure stammt, wobei mindestens ein Rest Z von H verschieden ist, und die Reste $-R'[(X\text{-}O\text{-})_nZ]_p$ aus der Gruppe entsprechend den folgenden Strukturen

$-O-CO-R^1$,

$-O-R^2$,

$-NR^3-R^2$,

$-NR^3-CH_2CH_2-O-CO-R^1$,

$-CH_2-CH[O-(X-O-)_nZ]-CH_2-O-CO-R^1$ und

$-NR^3-CH_2CH_2CH_2-NR^3-R^2$

ausgewählt sind, wobei in den vorstehenden Formeln $R^1$, $R^2$, X und Z die bereits genannten Bedeutungen haben, und

$R^3$ für Wasserstoff oder $(X\text{-}O\text{-})_nZ$,
n für 2 bis 50, insbesondere 2 bis 20,
w für 0 bis 100, insbesondere 1 bis 50, und
M für ein Kation aus der Gruppe von $H^+$, ein Alkalimetallkation, ein Äquivalent eines Erdalkalimetallkations, Ammonium oder eine Ammoniumgruppe, die durch niederes Alkyl substituiert ist und die durch Anlagerung von bis zu 100 Mol-Äquivalenten Ethylenoxid oder Propylenoxid oder eines Gemisches aus beiden Alkylenoxiden an Ammoniak oder niedere Alkylamine erhältlich ist,
stehen.

Praktische Bedeutung im Hinblick auf die ins Auge gefaßten anwendungstechnischen Eigenschaften haben solche erfindungsgemäße Verbindungen erlangt, die über die Acylgruppe oder die Hydroxygruppe der jeweiligen Naphthalinkerne Ar mit einem hydrophoben und an der verbleibenden Hydroxygruppe bzw. Acylgruppe mit einem hydrophilen Rest verbunden sind.

Unter den erfindungsgemäßen Verbindungen, die Novolake darstellen und in denen m 1 bis 9, vorzugsweise 1 bis 4 und insbesondere 1 oder 2 bedeutet, sind solche bevorzugt, in denen p für Null steht.

Gegenstand der Erfindung ist auch ein Verfahren zur Herstellung der erfindungsgemäßen Verbindungen der allgemeinen Formel (I), dadurch gekennzeichnet, daß man Hydroxynaphthalin-carbonsäuren der Formel HO-Ar-COOH durch Behandlung mit Verbindungen der Formel (II)

$H(\text{-}O\text{-}X)_w\text{-}R'[(X\text{-}O\text{-})_nZ]_p$ (II),

in denen Ar, X, R′, Z, w, n und p die bei der Erläuterung von Formel (I) genannten Bedeutungen haben und wobei vorzugsweise Z Wasserstoff oder p = 0 ist, an der Carboxylgruppe der Hydroxynaphthalin-carbonsäuren verestert, das so erzeugte Veresterungsprodukt - ohne weitere Isolierung oder nach Zwischenisolierung - gewünschtenfalls mit einem Aldehyd der Formel RCHO, in der R die bereits genannte Bedeutung hat, oder mit einer reaktionsfähigen Verbindung, welche einen entsprechenden Aldehyd freisetzt, unter Bildung eines Novolakharzes mit 2 bis 10 Kernen im Molekül kondensiert, dieses Novolakharz bzw. das schon zuvor erwähnte Veresterungsprodukt mit Ethylenoxid oder Propylenoxid oder mit einem Gemisch aus beiden Alkylenoxiden oxalkyliert, wobei Polyglykoletherketten an den Hydroxygruppen, die an Naphthalinkernen gebunden sind, sowie gegebenenfalls an noch vorhandenen weiteren Hydroxygruppen oder an reaktionsfähigen Wasserstoff aufweisenden Aminogruppen, die von der Verbindung der Formel (II) stammen, eingeführt werden, und man schließlich die endständigen Hydroxygruppen des erhaltenen Oxalkylats unmodifiziert läßt oder teilweise bzw. vollständig mit Säuren der Formel Z-OH, worin Z die bereits genannte Bedeutung hat, oder mit deren reaktionsfähigen Derivaten in ein oder mehreren Stufen umsetzt.

Als Ausgangsverbindungen für die Herstellung der neuen Verbindungen der Formel (I) eignen sich Hydroxynaphthalincarbonsäuren, wie 2-Hydroxy-1-naphthoesäure, 1-Hydroxy-2-naphthoesäure, 3-Hydroxy-1-naphthoesäure, 3-Hydroxy-2-naphthoesäure, 4-Hydroxy-2-naphthoesäure, 4-Hydroxy-1-naphthoesäure, 5-Hydroxy-1-naphthoesäure, 5-Hydroxy-2-naphthoesäure, 6-Hydroxy-2-naphthoesäure, 6-Hydroxy-1-naphthoesäure, 7-Hydroxy-2-naphthoesäure und 7-Hydroxy-1-naphthoesäure, 8-Hydroxy-2-naphthoesäure und 8-Hydroxy-1-naphthoesäure, vorzugsweise 3-Hydroxy-2-naphthoesäure und 6-Hydroxy-2-naphthoesäure.

Als Verbindungen der Formel (II) eignen sich beispielsweise:

a) gesättigte oder ungesättigte, geradkettige oder verzweigte Alkohole mit 1 bis 30 C-Atomen, wie Methanol, Ethanol, Propanol, Isopropanol, n-Butanol, 2-Butanol, Isobutanol, t-Butanol, Pentanol, Hexanol, Heptanol, Octanol, Nonanol,Decanol, Undecanol, Dodecanol, Tridecanol, Tetradecanol, Pentadecanol, Hexadecanol, Heptadecanol, Octadecanol, Nonadecanol, Eicosanol, Heneicosanol, Docosanol, Tricosanol, Tetracosanol, 2-Methylpentanol, 2-Ethylhexanol, 2-Propylheptanol, 2-Butyloctanol, 2-Pentylnonanol, 2-Hexyldecanol, 2-Heptylundecanol, 2-Octyldodecanol, 2-Nonyltridecanol, 2-Decyltetradecanol, 3-Undecyl-pentadecanol, 2-Dodecylhexadecanol, 10-Undecenol, 9c-Octadecenol, 9t-Octadecenol, 9c,12c-Octadecadienol, 9c,12c,15c-Octadecatrienol, 9c-Eicosenol, 5,8,11,14-Eicosatetraenol, 13c-Docosenol und 13t-Docosenol, vorzugsweise handelsübliche gesättigte oder ungesättigte Fettalkohole, wie Hexylalkohol, Decylalkohol, Undecylalkohol, Laurylalkohol, Tridecylalkohol, Myristinalkohol, Pentadecylalkohol, Cetylalkohol, Heptadecylalkohol, Stearylalkohol, Nonadecylalkohol, Eicosylalkohol, Heneicosylalkohol, Docosylalkohol, Elaidylalkohol, Oleylalkohol, Eicosenylalkohol, und Erucaalkohol, vorzugsweise letztgenannte geradzahlige Fettalkohole mit 12 bis 18 C-Atomen;

b) Monoamine oder Polyamine mit gesättigten oder ungesättigten Alkylrest mit 1 bis 30 C-Atomen, beispielsweise die den unter a) genannten Alkoholen entsprechenden Amine, die durch Austausch der Hydroxygruppe mit einer Aminogruppe entstehen, vorzugsweise Octylamin, Decylamin, Dodecylamin, Tetradecylamin, Hexadecylamin, Octadecylamin, Oleylamin, Stearylamin und Talgfettamin, aber auch Polyamine wie Talgfettpropylendiamin, N,N-Bis-(aminopropyl)-talgfettamin.

c) Harzalkohole oder Harzamine, vorzugsweise handelsübliche Harzverbindungen, die auf Basis von unmodifizierten oder modifizierten natürlichen Harzen gewonnen werden, z.B. Abietylalkohol, Dihydroabietylalkohol, Dehydroabietylalkohol sowie Abietylamin oder Dehydroabietylamin;

d) Oxalkylierungsprodukte, wie man sie durch Anlagerung von Ethylenoxid und/oder Propylenoxid an die unter a), b) oder c) genannten Verbindungen erhält, vorzugsweise Oxalkylierungsprodukte mit den unter a) bis c) bevorzugt genannten Fettalkoholen, Fettaminen, Harzalkoholen oder Harzaminen;

e) Oxalkylierungsprodukte, wie man sie durch Anlagerung von Ethylenoxid und/oder Propylenoxid an aliphatische, cycloaliphatische, aromatische, araliphatische oder arcycloaliphatische Carbonsäuren erhält, beispielsweise Oxalkylierungsprodukte an Alkansäuren, wie Ameisensäure, Essigsäure, Propionsäure, Buttersäure, Valeriansäure, Capronsäure, Heptansäure, Octansäure, Pelargonsäure, Caprinsäure, Undecansäure, Laurinsäure, Tridecansäure, Myristinsäure, Pentadecansäure, Palmitinsäure, Heptadecansäure, Stearinsäure, Nonadecansäure, Arachinsäure, Behensäure, 10-Undecensäure, Lauroleinsäure, Myristoleinsäure, Palmitoleinsäure, 6c- und 6t-Octadecensäure, Elaidinsäure, Ölsäure, Linolsäure, Linolensäure, Rizinolsäure oder Rizinensäure, insbesondere geradzahligen Fettsäuren oder Hydroxyfettsäuren mit jeweils 8 bis 20 C-Atomen, beispielsweise die entsprechend vorstehend genannten geradzahligen Fettsäuren sowie insbesondere ihre aus Naturprodukten gewonnenen Gemische, wie Tallölfettsäure, Talgfettsäure, Kokosölfettsäure, Palmölfettsäure, Leinölfettsäure, Rizinusölfettsäure und Rizinensäuren, vorzugsweise die genannten Fettsäuren mit 12 bis 18 C-Atomen; weiterhin geeignet sind modifizierte Fettsäuren und deren Gemische, wie sie durch Friedel-Crafts-Reaktion mit aromatischen Hydroxyverbindungen, beispielsweise mit Phenol, o-, m- und p-Kresol, Guayacol, Salicylsäure, α-Naphthol oder β-Naphthol mit ungesättigten Fettsäuren, wie Palmitoleinsäure, Ölsäure, Undecylsäure und Rizinolsäure, in Gegenwart von stark sauren oder säureabspaltenden Katalysatoren, wie z. B. Bortrifluorid, Aluminiumchlorid, p-Toluolsulfonsäure, Methansulfonsäure, Mineralsäuren oder Ionenaustauschern bei Temperaturen zwischen 50 - 200° C, vorzugsweise 120 - 160° C, ggfs. im organischen Medium, wobei auf 1 Mol der genannten Phenole oder Naphthole 0,5 - 1,1 Mol, vorzugsweise 0,9 - 1 Mol der ungesättigten Fettsäuren verwendet werden, erhältlich sind.

Weiterhin eignen sich Addukte von Ethylenoxid und/oder Propylenoxid an aromatische Carbonsäuren, wie Benzoesäure, Anthranilsäure, p-Aminobenzoesäure, Salicylsäure, o-, m- und p-Tolylsäuren, -Methoxy- und -Ethoxybenzoesäuren, -Acetoacetamidobenzoesäuren und -Acetamidobenzoesäuren, Phenylessigsäure oder Naphthoesäuren, insbesondere Hydroxynaphthoesäuren, beispielsweise 3-Hydroxy-1-naphthoesäure, 3-Hydroxy-2-naphthoesäure, 4-Hydroxy-2-naphthoesäure, 5-Hydroxy-1-naphthoesäure, 5-Hydroxy-2-naphthoesäure, 6-Hydroxy-2-naphthoesäure und 7-Hydroxy-2-naphthoesäure.

Weiterhin eignen sich Addukte von Ethylenoxid und/oder Propylenoxid an unmodifizierte oder modifizierte Naturharzsäuren vom Kolophoniumtyp oder reaktionsfähige Derivate davon, vorzugsweise an Harzsäuren wie Abietinsäure, Dehydroabietinsäure, Tetrahydroabietinsäure, Lävopimarsäure, Dextropimarsäure oder Isodextropimarsäure, wie sie in handelsüblichen Kolophoniumarten vorliegen, sowie an modifizierte Harzsäuren, wie disproportionierte, hydrierte und dimerisierte Naturharzsäuren.

Geeignet sind auch oxalkylierte Di- und Polycarbonsäuren, beispielsweise Oxalkylate der weiter unten zur Einführung von anionogenen Resten Z genannten Dicarbonsäuren, insbesondere die dort genannten substituierten Bernsteinsäuren und die dimerisierten und trimerisierten Fettsäuren.

Besonders geeignet sind Oxalkylierungsaddukte an gesättigte oder ungesättigte Fettsäuren mit 12 bis 22 C-Atomen, wie Laurylsäure, Myristinsäure, Palmitinsäure, Stearinsäure, Arachinsäure, Behensäure, Ölsäure, Talgfettsäure, Tallölfettsäure, Elaidinsäure, Erucasäure, Linolsäure, Linolensäure, Rizinolsäure, Rizinensäure, α-Eläostearinsäure, β-Eläostearinsäure sowie Addukte an natürliche Harzsäuren und/oder ihre Hydrierungs- und/oder ihre Disproportionierungsprodukte, wie sie in handelsüblichen Kolophoniumarten vorliegen oder daraus gewonnen werden.

f) Veresterungsprodukte, wie man sie durch Veresterung der unter e) als Ausgangsstoffe verwendeten Carbonsäuren mit einem mehrwertigen Alkohol, vorzugsweise einem 2- bis 6-wertigen Alkohol, insbesondere einem 2- oder 3-wertigen Alkohol, im Molverhältnis 1:1 oder einem höheren Molverhältnis erhalten werden, wobei im Veresterungsprodukt noch mindestens eine freie Hydroxygruppe enthalten sein muß,

oder

Veresterungsprodukte bzw. Amide, die in anloger Weise zu der Veresterung mit einem mehrwertigen Alkohol, jedoch durch Umsetzung mit einem Alkylolamin erhalten werden.

Als Vertreter der mehrwertigen, vorzugsweise niedermolekularen aliphatischen Alkohole oder Alkylolamine zur Veresterung der Carbonsäuren sind beispielsweise geeignet: Glycerin, Polyglycerine, 1,2,4-Butantriol, 1,4-Butandiol, Glykol, Polyglykole, 1,1,1-Trimethylolethan, 1,1,1-Trimethylolpropan, Pentaerythrit, 2,4-Dihydroxy-3-methylol-pentan, Hexantriol, Sorbit, Anhydrosorbit, Hexit und Mannit. Bevorzugte Alkylolamine sind Diethanolamin und Triethanolamin.

g) Oxalkylierungsprodukte, wie man sie durch Anlagerung von Ethylenoxid und/oder Propylenoxid an die unter f) genannten Veresterungsprodukte erhält;

h) Oxalkylierungsprodukte, insbesondere handelsübliche Oxalkylierungsprodukte, wie man sie durch

Anlagerung von Ethylenoxid und/oder Propylenoxid an aromatische Verbindungen erhält, die mindestens eine phenolische Hydroxygruppe aufweisen. Beispiele sind Oxalkylierungsprodukte an Phenol, Cresol, Xylenol, α- und β-Naphthol, Alkylphenole oder Alkylnaphthole, vorzugsweise Octylphenol, Nonylphenol, Decylphenol, Dodecylphenol, Tetradecylphenol, Dibutylphenol, Dioctylphenol, Dinonylphenol, Ditetradecylphenol, Tripropylphenol, Tributylphenol, Octylnaphthol, Nonylnaphthol, Decylnaphthol, Dodecylnaphthol, Dibutylnaphthol, Dihexylnaphthol, Dioctylnaphthol, Dinonylnaphthol, Ditetradecylnaphthol, und Tributylnaphthol.

Die Hydroxynaphthoesäuren werden nach an sich üblichen Veresterungsmethoden mit den unter a) bis f) genannten Verbindungen verestert. Die Reaktionstemperatur liegt in der Regel zwischen Raumtemperatur und 240 °C, je nach Veresterungsmethode. Bevorzugt wird zur Erhöhung der Ausbeute die Veresterung in einem unter den Reaktionsbedingungen inerten organischen Lösemittel durchgeführt, das als Schleppmittel zum Entfernen des Reaktionswassers geeignet ist.

Beispielsweise kann die Veresterung in den meisten Fällen in Xylol odr Toluol in Gegenwart von Brønsted-Säuren und/oder Lewis-Säuren bei der Siedetemperatur des Reaktionsgemisches -je nach Druck etwa zwischen 110 und 220 °C - durchgeführt werden. Als saure Katalysatoren können beispielsweise Mineralsäuren wie Schwefelsäure, Salzsäure oder Phosphorsäure, organische Säuren wie p-Toluolsulfonsäure oder Benzolsulfonsäure, oder Lewis-Säuren wie Borfluorid, Borsäure, Zinnpulver oder Zinkchlorid, oder auch ein stark saurer Ionenaustauscher verwendet werden.

Die erhaltenen Hydroxynaphthoesäureester können zur Herstellung der erfindungsgemäßen Verbindungen der Formel (I) direkt oxalkyliert werden, oder zunächst zur Bildung eines Novolakharzes mit einem Aldehyd der Formel RCHO kondensiert werden. Die Herstellung eines erfindungsgemäßen Novolak-Zwischenproduktes kann nach an sich bekannten Verfahren erfolgen; siehe beispielsweise Hultzsch, Chemie der Phenolharze, 1950, Seite 114 oder Houben-Weyl, Methoden der organischen Chemie, 1963, Seite 201 bis 213 oder US-A 4 032 514 oder J. Org. Chem. 43, Seiten 4905 bis 4906. Bevorzugte Aldehyde für die Herstellung der Novolake sind Formaldehyd, Acetaldehyd, Propionaldehyd, Butyraldehyd oder Verbindungen, die Aldehyd freisetzen, wie Paraformaldehyd, Trioxan, Tetraoxymethylen oder Paraldehyd, vorzugsweise Formaldehyd, Glyoxal und Acetaldehyd. Für die Herstellung der Novolake sind vorzugsweise Ester aus Hydroxynaphthoesäuren und Verbindungen der Formel (II) geeignet, in welcher p Null ist.

Für einen Novolak mit (m+1) Hydroxynaphthoesäureester-Einheiten werden in der Regel (m+1) Moläquivalente Hydroxynaphthoesäureester mit m Moläquivalenten Aldehyd der Formel RCHO umgesetzt. Vorzugsweise wird ein Molverhältnis Hydroxynaphthoesäure:Aldehyd von 2:1 bis 9:8, insbesondere 2:1 bis 5:4, verwendet und die Kondensation in Gegenwart saurer Katalysatoren durchgeführt. Als saure Katalysatoren können beispielsweise Mineralsäuren, wie Schwefelsäure, Salzsäure, und Phosphorsäure, oder Sulfonsäuren, wie Dodecylbenzolsulfonsäure und vorzugsweise Salzsäure mit einer Konzentration von 0,1 bis 5 Gew.-%, bezogen auf den Hydroxynaphthoesäureester, verwendet werden. Das nach einer Reaktionszeit von in der Regel 3 bis 20 Stunden bei 20 °C bis 150 °C, bevorzugt 80 bis 130 °C, unter Stickstoff gebildete Reaktionswasser wird vorzugsweise bis zu einem Wassergehalt im Novolakharz von weniger als 0,5 % abdestilliert, wobei gegen Ende ein verminderter Druck von weniger als etwa 65 mbar vorteilhaft ist. Die erhaltenen Novolake sind mehr oder weniger zähflüssige bis wachsartige bzw. spröde, klare, hell- bis dunkelbraun gefärbte Harze.

Die Oxalkylierung der Hydroxynaphthoesäureester oder der daraus hergestellten Novolakharze erfolgt nach bekannten Methoden, vorzugsweise mit Alkalihydroxiden oder -alkoholaten als Katalysator, bei 100 - 200 °C, insbesondere bei 140 - 180 °C. Die Menge an Ethylenoxid oder Propylenoxid oder beiden wird so bemessen, daß vorzugsweise eine stabile Emulgierbarkeit oder eine völlige Löslichkeit der Anlagerungsprodukte in Wasser erreicht wird. Zweckmäßig werden an jeder naphtholischen Hydroxygruppe, jeder weiteren Hydroxygruppe sowie an jedes Wasserstoffatom der vorhandenen sekundären und primären Aminogruppen der Hydroxynaphthoesäureester oder der entsprechenden Novolakharze bis zu 200, insbesondere jeweils 1 bis 100, vorzugsweise 1 - 50, insbesondere 5 - 25 Moleküle Ethylenoxid oder Propylenoxid oder beide angelagert. Die Menge des angelagerten Alkylenoxids bemißt sich auch nach dem beabsichtigten Einsatzzweck und damit dem angestrebten Grad der Hydrophilie. Als Alkalihydroxid eignen sich Kaliumhydroxid oder bevorzugt Natriumhydroxid, als Alkalialkoholat Natriummethylat oder -ethylat; die Konzentration der alkalischen Katalysatoren soll bevorzugt bei 0,05 - 1,0 Gew.-%, bezogen auf Novolakharz, bei Beginn der Oxalkylierung sein. Die Oxalkylierung kann drucklos oder in Druckgefäßen mit Propylenoxid oder bevorzugt mit Ethylenoxid oder Mischungen von beiden durchgeführt werden, wobei das Alkylenoxid gasförmig oder flüssig zugeführt werden kann. Der Arbeitsdruck beträgt in der Regel 1 - 10, vorzugsweise 2 - 4 bar.

Die erhaltenen oxalkylierten Hydroxynaphthoesäureester und entsprechende Novolakharze sind bereits wertvolle oberflächenaktive Hilfsmittel. Eine vorteilhafte Modifizierung der anwendungstechnischen Eigenschaften ermöglicht die Veresterung eines Teils oder aller endständigen Hydroxygruppen der Polyglykoletherketten unter Einführung von Resten Z anstelle des Wasserstoffs der Hydroxygruppen, wobei Z eine der obengenannten von Wasserstoff verschiedenen Bedeutungen hat.

Die Einführung der Reste Z kann in ein oder mehreren Reaktionsstufen erfolgen. Zur Einführung von nichtionogenen oder kationogenen Resten Z eignet sich die Veresterung mit Monocarbonsäuren oder deren reaktiven Derivaten. Geeignete Monocarbonsäuren sind die bereits zur Herstellung von Oxalkylaten der Formel (II) (s. dort Abschnitt e) genannten Monocarbonsäuren. Für die Einführung nichtionogener Acylreste Z sind besonders geeignet:

Harzsäuren wie Abietinsäure, Dehydroabietinsäure, Tetrahydroabietinsäure, Lävopimarsäure, Dextropimarsäure und Isodextropimarsäure, wie sie in handelsüblichen Kolophoniumarten vorliegen, sowie modifizierte Harzsäuren, wie disproportionierte, hydrierte und dimerisierte Naturharzsäuren; weiterhin eignen sich für die Veresterung modifizierte Naturharzsäuren, wie sie durch Umsetzung von Naturharzsäuren mit halogenabspaltenden, araliphatischen oder aromatischen Verbindungen wie Benzylchlorid, o-, m-und p-Bis-(chlormethyl)-benzol, 2-, 3- und 4-Chlormethyl-toluol, Benzalchlorid, 1- und 2-Chlormethylnaphthalin, 2-, 3- und 4-Chlorphenol, 5-Chlor-2-hydroxytoluol, 2-Chlor-5-hydroxy-1,3-xylol, 4-Chlordiphenyl, 1- und 2-Chlornaphthalin, 1-Chlor-2-naphthol und 2-Chlor-1-naphthol, oder mit cycloaliphatischen Verbindungen wie Cyclohexylchlorid in Gegenwart eines Katalysators wie Zinkchlorid bei einer Temperatur von 100 - 220 °C erhalten werden, wobei ein Mol Harzsäure 0,5 - 1 Mol der genannten Chlorkohlenwasserstoffe eingesetzt werden.

Weiterhin eignen sich für die Veresterung Harz-Phenol-Verbindungen, wie sie durch Addition von Phenolen wie Hydroxybenzol, o-, m- und p-Kresol, Orthokresolacetat, Salicylsäure, Guajacol, Bisphenol A, α-Naphthol und β-Naphthol an natürliche Harzsäuren oder handelsübliche Kolophoniumarten in Gegenwart von stark sauren oder säureabspaltenden Katalysatoren, wie z. B. Bortrifluorid, Chlorwasserstoff, Zinntetrachlorid, Aluminiumtrichlorid oder Mineralsäuren bei einer Temperatur von vorzugsweise 20 bis 120 °C in einem organischen Medium oder in Gegenwart eines stark sauren Ionenaustauschers bei vorzugsweise 120 bis 200 °C, insbesondere bei 150 bis 170 °C, gewonnen werden, wobei auf ein Mol Harzsäure 0,5 bis 0,8, vorzugsweise 0,65 bis 0,75 Mol der genannten Phenole eingesetzt werden.

Vorzugsweise können nichtionogene Acylreste Z auch durch Veresterung mit gesättigten oder ungesättigten Carbonsäuren oder Hydroxycarbonsäuren, insbesondere Fettsäuren oder Hydroxyfettsäuren, wie beispielsweise Essigsäure, Propionsäure, Buttersäure, Valeriansäure, Capronsäure, Heptansäure, Octansäure, Pelargonsäure, Caprinsäure, Laurinsäure, Myristinsäure, Palmitinsäure, Stearinsäure, Arachinsäure, Behensäure, Ölsäure, Linolsäure, Talgfettsäure und Rizinolsäure, vorzugsweise die genannten Fettsäuren mit 12 - 18 C-Atomen, insbesondere wie sie als handelsübliche Fettsäuren oder Fettsäuregemische vorliegen, eingeführt werden.

Nichtionogene oder kationogene Acylreste können auch durch Veresterung mit aromatischen Carbonsäuren, wie Benzoesäure, Anthranilsäure, p-Aminobenzoesäure, Salicylsäure, o-, m- und p-Tolylsäuren, -Methoxy- und -Ethoxybenzoesäuren, -Acetoacetamidobenzoesäuren und -Acetamidobenzoesäuren, Phenylessigsäure oder Naphthoesäuren, insbesondere Hydroxynaphthoesäuren, beispielsweise 3-Hydroxy-1-naphthoesäure, 3-Hydroxy-2-naphthoesäure, 4-Hydroxy-2-naphthoesäure, 5-Hydroxy-1-naphthoesäure, 5-Hydroxy-2-naphthoesäure, 6-Hydroxy-2-naphthoesäure und 7-Hydroxy-2-naphthoesäure, eingeführt werden.

Die Veresterung mit den genannten Carbonsäuren kann analog der weiter oben beschriebenen Veresterung der Hydroxynaphthoesäuren mit Verbindungen der Formel (II) durchgeführt werden.

Die Veresterung der oxalkylierten Hydroxynaphthoesäureester bzw. entsprechender Novolake mit den bisher genannten Monocarbonsäuren kann alternativ auch durch Umesterung unter Einsatz der entsprechenden Alkylester, vorzugsweise Methylestern der genannten Carbonsäuren in Gegenwart von 0,1 -1,0 Mol-Äquivalenten Alkoholaten, vorzugsweise Natriummethylat bei 150 - 200 °C, vorzugsweise 160 - 190 °C unter Abdestillieren des freiwerdenden Alkanols bzw. Methanols erfolgen.

Zur Einführung von anionogenen Acylresten Z können die oxalkylierten Hydroxynaphthoesäureester, entsprechende Novolake oder aus den vorstehenden Oxalkylaten mit den obengenannten Monocarbonsäuren teilweise veresterte Oxalkylate mit Dicarbonsäuren, Polycarbonsäuren, Schwefelsäure oder Chlorsulfonsäure oder entsprechenden Anhydriden umgesetzt werden. Als Dicarbonsäuren oder deren Anhydride sind für die Veresterung beispielsweise geeignet: Maleinsäure, Maleinsäureanhydrid, Fumarsäure, Phthalsäure, Phthalsäureanhydrid, Isophthalsäure, Terephthalsäure, Oxalsäure, Malonsäure, Bernsteinsäure, Bernsteinsäureanhydrid, Glutarsäure, Adipinsäure, Pimelinsäure, Korksäure, Acelainsäure und Sebacinsäure.

Alternativ können in der zweiten Reaktionsstufe bzw. in einer dritten Reaktionsstufe freie Hydroxygruppen mit Alkyl-, Alkenyl- oder Alkylidenbernsteinsäure bzw. -bernsteinsäureanhydriden halbverestert werden. Als α-alkyliertie Bernsteinsäuren sind insbesondere solche mit geradkettigen Resten aus der Gruppe Octyl, Nonyl, Decyl, Undecyl, Dodecyl, Tridecyl, Tetradecyl, Pentadecyl, Hexadecyl, Heptadecyl und Octadecyl, die vorzugsweise eine Doppelbindung aufweisen, insbesondere eine Doppelbindung zwischen dem zweiten

und dritten C-Atomen im Alkylrest aufweisen, sowie α-alkylierte Bernsteinsäuren bzw. Anhydride, in denen ein verzweigter gesättigter oder ungesättigter $C_8$-$C_{12}$-Alkylrest, insbesondere Tripropylen-oder Tetrapropylenrest vorhanden ist, geeignet. Bevorzugte α-alkylierte Bernsteinsäuren sind beispielsweise durch Umsetzung von n-Octen, n-Nonen, n-Decen, n-Undecen, n-Dodecen, n-Tridecen, n-Tetradecen, n-Pentadecen, n-Heptadecen, n-Octadecen, Tripropylen oder Tetrapropylen mit Maleinsäureanhydrid in Gegenwart saurer Katalysatoren erhältlich (siehe z. B. Angew. Chem. 81, S. 597 - 618 (1969), "En-Reaktion" und dort zit. Lit. sowie US-A-3306901).

Die Veresterung mit α-alkylierten Bernsteinsäureanhydriden erfolgt vorzugsweise bei 20 - 100° C, insbesondere 40 - 80° C, in Gegenwart von 0,1 - 1,0 Gew.-% Alkalihydroxiden, bezogen auf die Gesamtmischung.

Weiterhin sind besonders geeignet dimerisierte oder trimerisierte (ungesättigte) Fettsäuren, vorzugsweise auf Basis von $C_{12}$- bis $C_{20}$-Fettsäuren, insbesondere $C_{16}$-$C_{18}$-Fettsäuren.

Vorzugsweise werden die anionischen Gruppen durch Reaktion mit Maleinsäureanhydrid oder Phthalsäureanhydrid unter Mischung und Verrühren bei 20 - 100° C, bevorzugt bei 40 - 80° C, in Anwesenheit von Alkalihydroxiden eingeführt. Die Konzentration der Alkalihydroxide soll 0,1 - 1,0 Gew.-%, bezogen auf die Gesamtmischung, betragen. Im Falle von Maleinsäureanhydrid ist es wegen der Sublimationsneigung vorteilhaft, in Druckgefäßen unter einem Überdruck von 0,2 - 1,0 bar Stickstoff oder Luft zu arbeiten und für kräftiges Durchmischen zu sorgen, da zu Beginn der Reaktion das geschmolzene Maleinsäureanhydrid mit den teilveresterten Oxalkylaten schlecht mischbar ist.

Im Falle von eingeführten Maleinsäurehalbestergruppen ist es außerdem vorteilhaft, diese Halbestergruppen in die entsprechenden Sulfobernsteinsäurehalbestergruppen zu überführen. Dies gelingt beispielsweise nach Zugabe von wäßrigen Lösungen von Sulfiten oder Hydrogensulfiten zu den Verbindungen, die Maleinsäurehalbestergruppen aufweisen. Auf jede Maleinsäurehalbestergruppe werden 1,0 - 1,5, bevorzugt 1,0 - 1,1 Mol schweflige Säure in Form von Alkali- oder Erdalkalisulfiten oder -hydrogensulfiten oder -pyrosulfiten eingesetzt. Die zugesetzte Wassermenge beträgt in der Regel etwa 50 - 85 Gew.-%, bezogen auf die gesamte Lösung bzw. Mischung, und ist abhängig von der Löslichkeit der Sulfobernsteinsäurehalbestersalze und der Viskosität der Lösungen. Die Reaktionstemperaturen bei der Umsetzung von Sulfiten mit den Maleinsäurehalbesterverbindungen betragen in der Regel 20 - 100° C, bevorzugt 40 - 80° C.

Während sich die Sulfite besonders zur Bildung der Dialkalisalze der Sulfobernsteinsäurehalbester eignen, ist es bei der Anlagerung von Hydrogensulfiten möglich, durch Neutralisation mit Basen wie Ammoniak, niedermolekularen Alkylaminen oder Alkylolaminen oder deren Alkylenoxidaddukten, wobei pro Mol Amin oder Alkylolamin bis zu etwa 150 Mol Ethylenoxid oder Propylenoxid oder beide angelagert und pro reaktionsfähiges Wasserstoffatom der genannten Verbindungen bis zu 150, vorzugsweise 5 - 30 Moläquivalenten Ethylenoxid oder Propylenoxid oder beide angelagert sind, den Grad der Hydrophile zusätzlich zu beinflussen. Als Vertreter der Alkylamine oder Alkyloamine seien genannt: Ethylamin, Propylamin, Isopropylamin, Butylamin, Isobutylamin, Monoethanolamin, Monopropanolamin, Monoisopropanolamin, Monobutanolamin, Monoisobutanolamin, Diethanolamin, Dipropanolamin, Dibutanolamin, Triethanolamin, Tripropanolamin oder Tributanolamin sowie Di- und Polyamine wie Ethylendiamin, Ethylentriamin, Triethylentetramin, Propylendiamin, Dipropylendiamin, Dipropyltentriamin oder Tripropylentetramin.

Der am Beispiel der Sulfobernsteinsäurehalbester beschriebene Kationenaustausch kann auch bei den Verbindungen der Formel (I) erfolgen, die andere anionische Gruppen aufweisen. Dabei werden die Verbindungen in ihrer Säureform eingesetzt und in analoger Weise durch Neutralisation mit den obengenannten Aminen oder anorganischen Basen in die entsprechenden Salze überführt. Auch andere übliche Kationenaustauschverfahren können angewendet werden.

Die Sulfatierung freier Hydroxygruppen der oxalkylierten und partiell veresteren Novolake kann nach bekannten Verfahren erfolgen, wobei als Sulfatierungsreagens beispielsweise Schwefelsäure, Chlorsulfonsäure, Amidosulfonsäure, mit Inertgas verdünntes $SO_3$-Gas oder ein $SO_3$-Addukt, z. B. $SO_3$-Dioxan, verwendet werden kann. Die Sulfatierung erfolgt unter guter Durchmischung, erforderlichenfalls unter Zusatz eines inerten Verdünnungsmittels, beispielsweise Methylenchlorid. Je nach Sulfatierungsmittel werden dabei Temperaturen von 0 bis etwa 150° C eingehalten. Die Menge des einzusetzenden Sulfatierungsagens kann so bemessen werden, daß noch alle freien Hydroxygruppen oder nur ein Teil davon umgesetzt werden.

Während bei der Sulfatierung mit Amidosulfonsäure die Ammoniumsalze der Schwefelsäurehalbester anfallen, entstehen bei der technisch interessantesten Ausführungsform mit gasförmigen Schwefeltrioxid in Mischung mit Inertgas sowie auch bei der Sulfatierung mit Chlorsulfonsäure die Schwefelsäurehalbester in der Säureform, aus denen leicht die gewünschten Salze durch Neutralisation mit entsprechenden anorganischen oder organischen Basen hergestellt werden können. Zu dieser Neutralisation werden bevorzugt die Alkalihydroxide eingesetzt, die zu sehr gut wasserlöslichen Alkalisalzen der erfindungsgemäßen Schwefelsäurehalbester führen.

Gegenstand der Erfindung ist außerdem die Verwendung der erfindungsgemäßen Verbindungen der

Formel (I) als grenzflächenaktive Mittel. Bei den erfindungsgemäßen Verbindungen oder ihren Gemischen handelt es sich um Substanzen, die aufgrund ihrer günstigen oberflächenaktiven Eigenschaften äußerst vielseitig einsetzbar sind. So ergeben sie in Wasser stabile Emulsionen oder sind in Wasser klar löslich. Sie entsprechen der Definition der oberflächenaktiven Verbindungen wie sie in der DIN-Norm 53 900 festgelegt ist. Sie senken die Oberflächenspannung nach der Ringabreißmethode (DIN 53914) und sind nach dem Ross-Miles Test (DIN 53902) schaumarm bis nahezu schaumfrei. Außerdem netzen sie Baumwollgewebe nach der Tauchnetzmethode (DIN 53901) und sind gegen Alkali sowie starke Säuren unter üblichen Anwendungsbedingungen der Tenside beständig. Sie besitzen weiterhin ein sehr gutes Flockungsschutzvermögen gegenüber Farbstoffen und Pigmenten (DIN 53 908) und ein sehr gutes Wasserverteilungsvermögen für Reinigungsverstärker (DIN 53 980) sowie neben ihrem guten Egalisierverhalten (DIN 53 988) eine gute Auswaschbarkeit als Schmälzmittel (DIN 53 504). Sie lassen sich in der Regel auch durch die Angabe des Krafft-Punktes (DIN 53 918), durch die Bestimmung des Trübungspunktes (DIN 53 917) oder durch die Titrationszahl (DIN 53 989) näher charakterisieren. Die Verbindungen sind in der Regel gut biologisch abbaubar. Die Bestimmung der biologischen Abbaubarkeit erfolgt beispielsweise nach DIN 38 412.

Die erfindungsgemäßen Substanzen können sowohl als Emulgatoren als auch als Dispergiermittel für die verschiedensten Anwendungsbereiche verwendet werden. Dies gilt vor allem für die Anwendung als Kupplungshilfsmittel oder Präparationsmittel oder beides bei der Herstellung von Azoverbindungen, vorzugsweise Azofarbmitteln, insbesondere von Azopigmenten. Die erfindungsgemäßen Verbindungen eignen sich als Emulgator für die Herstellung von Metallbearbeitungsmitteln, Carrier-Emulsionen, Chemisch-Reinigungsverstärker sowie Polymerisationsprodukten und für die Verwendung in der Erdölindustrie.

Die erfindungsgemäßen Verbindungen eignen sich weiterhin hervorragend als Dispergiermittel für die Herstellung schaumarmer Dispersionen von Pigmenten, Farbstoffen und optischen Aufhellern sowie für die Formulierung von Pflanzenenschutz- und Schädlingsbekämpfungsmitteln, ferner als Flotationsreagenz sowie als Egalisier- und Färbereihilfsmittel zum Färben von natürlichen und synthetischen Fasermaterialien wie Baumwolle, Wolle, Cellulose, Zellwolle, Celluloseacetat und -triacetat, Polyester, Polyamid und Polyacrylnitril oder von Fasermaterialien, die diese Stoffe enthalten.

Die erfindungsgemäßen Verbindungen können einzeln oder als Gemische sowie in Kombinationen mit anderen nicht-ionogenen anionischen oder kationaktiven Tensiden oder Gemischen davon eingesetzt werden. Weiterhin können sie zusammen mit Gerüstsubstanzen oder anderen üblichen Zusätzen oder Hilfsstoffen in Emulgier- und Dispergiermittelformulierungen zur Anwendung kommen.

In den folgenden Beispielen beziehen sich "Teile" und Prozentangaben auf das Gewicht, Volumenteile verhalten sich zu Gewichtsteilen wie Kilogramm zu Liter. Druckangaben bedeuten "Überdruck", bezogen auf Atmosphärendruck, sofern nichts anderes angegeben ist. Die Säurezahl (SZ) wird nach DIN 53 402 und die Hydroxylzahl nach DIN 53 240 bestimmt. "EO" und "PO" sind Abkürzungen für Ethylenoxy- bzw. Propylenoxy-Einheiten in Polyglykoletherketten.

## Beispiele

### 1a) Ester aus 3-Hydroxy-2-naphthoesäure + (Ölsäure + 6EO)

188 Teile 3-Hydroxy-2-naphthoesäure und 546 Teile handelsübliches Addukt aus Ölsäure und 6 Moläquivalenten Ethylenoxid werden auf 90 °C bis 100 °C erwärmt und unter Stickstoffüberlagerung gut gemischt. Nach Zugabe von 3 Teilen p-Toluolsulfonsäure und 150 ml Xylol wird 8 bis 10 Stunden lang auf 155 bis 165 °C erhitzt und das Reaktionswasser durch Auskreisen entfernt. Danach wird das Xylol abdestilliert und anschließend 4 Stunden bei 210 bis 220 °C unter Stickstoffatmosphäre weiter gerührt. Danach erhält man ein Produkt mit einer Säurezahl von weniger als 50.

### 1b) Oxethylat von 1a)

200 Teile 3-Hydroxy-2-naphthoesäureester 1a) werden nach Zugabe von einem Teil Natriumhydroxid in einem Druckgefäß unter Rühren und Zuführen von 580 Teilen Ethylenoxid bei 150 bis 160 °C unter Aufrechterhalten eines Druckes von etwa 1,5 bis 2 bar oxalkyliert. Nachdem das ganze Ethylenoxid aufgedrückt worden ist, wird eine Stunde bei 150 bis 160 °C nachgerührt. Der erhaltene oxalkylierte Naphthoesäureester enthält im Mittel 48 Ethylenoxy-Einheiten pro Molekül und besitzt eine Hydroxyzahl von etwa 20.

**2a) Addukt aus 1a) + 14 EO**

200 Teile Ester 1a) werden analog Beispiel 1b) mit 240 Teilen Ethylenoxid umgesetzt. Der erhaltene oxethylierte Naphthoesäureester enthält im Mittel insgesamt 20 Ethylenoxy-Einheiten pro Molekül und eine Hydroxyzahl von etwa 35.

**2b) Sulfobernsteinsäurehalbester von 2a)**

300 Teile des nach 2a) erhaltenen Oxethylats werden nach Zugabe von 18,2 bis 19,1 Teilen Maleinsäureanhydrid und 0,3 Teilen Ätznatron innerhalb von 3 Stunden bei 70 bis 80°C unter Überlagerung von Stickstoff verestert. Anschließend werden nach Verdünnen mit Wasser 23,4 bis 24,6 Teile Natriumsulfit als wäßrige Lösung bei 70 bis 80°C innerhalb von 15 bis 20 Minuten zugegeben. Sobald der Ansatz klar geworden ist, wird noch eine Stunde nachgerührt. Die Menge des zugesetzten Wassers kann zwischen 50 und 85 % der fertigen Lösung betragen.

**3a) Ester aus 6-Hydroxy-2-naphthoesäure + (Stearinsäure + 88 EO)**

284 Teile Stearinsäure werden in Gegenwart von 1,5 Teilen Natriumhydroxid bei 150 bis 160°C Innentemperatur und einem Druck von 4 bis 6 bar mit 88 Teilen Ethylenoxid unter Stickstoffatmosphäre umgesetzt. Nach Neutralstellung mit Essigsäure und Zugabe von 3 Teilen p-Toluolsulfonsäure, 150 Volumenteilen Xylol und 188 Teilen 6-Hydroxy-2-naphthoesäure wird 10 bis 12 Stunden auf 155 bis 165°C erhitzt und das Reaktionswasser durch Auskreisen entfernt. Nach Abdestillieren des Xylols läßt man noch 4 Stunden bei 210 bis 230°C nachrühren. Der erhaltene Ester hat eine Säurezahl von weniger als 36.

**3b) 5-Kern-Novolakharz auf Basis von 3a)**

500 Teile 3a) werden bei Raumtemperatur vorgelegt und unter langsamen Rühren 1,5 Teile Dodecylbenzolsulfonsäure in 10 Teilen Wasser eingetragen. Unter Stickstoffatmosphäre wird die Temperatur auf 100 bis 120°C erhöht und innerhalb von 1 bis 2 Stunden 66 Teile Formaldehyd (36 %ig in Wasser) zugetropft und anschließend 4 Stunden bei 120°C gerührt. Nach Erhöhung der Innentemperatur auf 130 bis 135°C wird innerhalb von 1 Stunde das Reaktionswasser unter reduziertem Druck bei 20 bis 30 mbar entfernt und anschließend 2 Stunden bei gleicher Temperatur nachgerührt. Es werden etwa 515 Teile eines dunkelbraunen, wachsweichen Novolakharzes erhalten.

**3c) Oxethylat von 3b)**

200 Teile 5-Kern-Novolakharz 3b) werden entsprechend Beispiel 1b) mit 569 Teilen Ethylenoxid umgesetzt. Das Oxethylat enthält insgesamt im Mittel 178 Ethylenoxy-Einheiten pro Molekül. Die Hydroxylzahl beträgt etwa 27.

**3d) Sulfobernsteinsäurehalbester von 3c)**

300 Teile des nach 3c) erhaltenen Oxethylats werden nach Zugabe von 13,8 bis 14,1 Teilen Maleinsäureanhydrid und 0,3 Teilen Ätznatron in 3 Stunden bei 70 bis 80°C unter Überlagerung von Stickstoff verestert. Nach Verdünnen mit Wasser werden 17,7 bis 18,2 Teile Natriumsulfit als wäßrige Lösung bei 70 bis 80°C innerhalb von 15 bis 20 Minuten zugegeben. Sobald der Ansatz klar geworden ist, wird noch eine Stunde nachgerührt. Die Menge des zugesetzten Wassers kan zwischen 50 und 85 % der fertigen Lösung des Produkts betragen.

**4a) Ester aus 3-Hydroxy-2-naphthoesäure + Oleylalkohol**

188 Teile 3-Hydroxy-2-naphthoesäure und 268 Teile eines handelsüblichen Oleylalkohols werden auf 90

bis 100 °C Innentemperatur erhitzt und unter Stickstoffatmosphäre gut gemischt. Nach Zugabe von 2 Teilen p-Toluolsulfonsäure und 150 Teilen Xylol wird die Temperatur auf 150 bis 160 °C erhöht und innerhalb von 12 Stunden das Reaktionswasser durch Auskreisen entfernt. Nach Abdestillieren des Xylols läßt man noch 2 Stunden bei 200 bis 210 °C nachrühren. Das Produkt hat eine Säurezahl von weniger als 36.

**4b) Oxethylat von 4a)**

200 Teile Produkt 4a) werden nach Zugabe von 1,1 Teilen frischpulversiertem Ätznatron in einem Druckgefäß unter Rühren und Zuführen von 600 Teilen Ethylenoxid bei 150 bis 160 °C Innentemperatur unter Aufrechterhalten eines Drucks von 2 bis 4 bar oxethyliert. Das erhaltene braune zähflüssige Oxethylat enthält im Mittel 30 Ethylenoxy-Einheiten pro Molekül und besitzt eine Hydroxyzahl von etwa 33. Das Produkt ist in Wasser klar löslich.

**5a) Ester aus 3-Hydroxy-2-naphthoesäure + (Kolophonium + 15 EO)**

188 Teile 3-Hydroxy-2-naphthoesäure und 964 Teile eines mit 15 Mol Ethylenoxid oxethylierten disproportionierten Kolophoniums werden nach Zugabe von einem Teil p-Toluolsulfonsäure und 4 Teilen Zinnpulver analog Beispiel 4a) bis zu einer Säurezahl von weniger als 37. verestert.

**5b) Oxethylat von 5a)**

200 Teile Produkt aus Beispiel 5a) werden nach Zugabe von 1,1 Teilen frischpulverisiertem Ätznatron entsprechend Beispiel 4b) mit 158 Teilen Ethylenoxid umgesetzt. Das erhaltene braune, zähflüssige Oxethylat enthält insgesamt im Mittel 35 Ethylenoxy Einheiten pro Molekül und besitzt eine Hydroxylzahl von etwa 33. Das Produkt ist in Wasser klar löslich.

**6a) Ester aus 6-Hydroxy-2-naphthoesäure + (Nonylphenol + 10 EO)**

188 Teile 6-Hydroxy-2-naphthoesäure und 660 Teile eines handelsüblichen Nonylphenoloxethylates mit 10 Ethylenoxy- Einheiten pro Molekül werden nach Zugabe von 3 Teilen p-Toluolsulfonsäure analog Beispiel 4a) bis zu einer Säurezahl von weniger als 35 verestert.

**6b) Oxethylat von 6a)**

200 Teile Produkt aus 6a) werden nach Zugabe von 1,3 Teilen frischpulverisiertem Ätznatron analog Beispiel 4b) mit 156 Teilen Ethylenoxid umgesetzt. Das erhaltene braune, zähflüssige Oxethylat enthält im Mittel insgesamt 25 Ethylenoxy-Enheiten pro Molekül. Das Produkt ist in Wasser klar löslich und besitzt eine Hydroxylzahl von etwa 40.

**7a) Ester aus 6-Hydroxy-2-naphthoesäure + (Tallölfettsäure + 6 EO)**

188 Teile 6-Hydroxy-2-naphthoesäure und 546 Teile eines handelsüblichen Oxethylats aus Tallölfettsäure und 6 Moläquivalenten Ethylenoxid werden nach Zugabe von 1,5 Teilen p-Toluolsulfonsäure analog Beispiel 4a) bis zu einer Säurezahl von weniger als 31 verestert.

**7b) Oxethylat von 7a)**

200 Teile Produkt aus 7a) werden nach Zugabe von 1,5 Teilen frischpulverisiertem Ätznatron analog Beispiel 4b) mit 166 Teilen Ethylenoxid umgesetzt. Das erhaltene bräune, dickflüssige Oxethylat enthält im Mittel ingesamt 20 Ethylenoxy-Einheiten pro Molekül und besitzt eine Hydroxyzahl von etwa 42. Das Endprodukt ergibt in Wasser eine stabile, transparente Emulsion.

**8a) Ester aus 6-Hydroxy-2-naphthoesäure + (Stearinsäureamid + 4 EO)**

188 Teile 6-Hydroxy-2-naphthoesäure und 447 Teile eines handelsüblichen Oxethylats aus Stearinsäureamid und 4 Moläquivalenten Ethylenoxid werden nach Zugabe von einem Teil p-Toluolsulfonsäure entsprechend Beispiel 4a) bis zu einer Säurezahl von weniger als 29 verestert.

**8b) Oxethylat von 8a)**

300 Teile des Produktes aus Beispiel 8a) werden in einem Druckgefäß mit 3,5, Teilen 30 %iger Lösung von Natriummethylat in Methanol versetzt, das Methanol unter reduziertem Druck und Erwärmen auf 40 bis 80 °C abgezogen und unter Rühren und Erhitzen auf 145 bis 160 °C unter Zuführen von 291 Teilen Ethylenoxid bei einem Druck von 4,4 bis 6,0 bar oxethyliert. Das erhaltene dunkelbraune, wachsweiche Oxethylat enthält insgesamt etwa 25 Ethylenoxy-Einheiten pro Molekül. Das Produkt besitzt eine Hydroxyzahl von etwa 72 und ergibt in Wasser eine stabile transparente Emulsion.

**9a) Ester aus 6-Hydroxy-2-naphthoesäure + (Rizinenfettsäure + 6 EO)**

188 Teile 6-Hydroxy-2-naphthoesäure und 544 Teile eines Oxethylates aus handelsüblicher Rizinenfettsäure mit einem Gehalt von 25 % Linolsäure und 6 Moläquivalenten Ethylenoxid werden nach Zugabe von 1,5 Teilen p-Toluolsulfonsäure analog Beispiel 1a) bis zu einer Säurezahl von weniger als 35 verestert.

**9b) Oxethylat von 9a)**

200 Teile Produkt aus Beispiel 9a) werden nach Zugabe von 4 Teilen Natriummethylatlösung entsprechend Beispiel 8b) mit 252 Teilen Ethylenoxid umgesetzt. Das erhaltene rotbraune, dickflüssige Oxethylierungsaddukt enthält insgesamt im Mittel 25 Ethylenoxy-Einheiten pro Molekül und besitzt eine Hydroxylzahl von etwa 41.

**9c) Sulfobernsteinsäurehalbester von 9b)**

300 Teile des nach 9b) erhaltenen Oxethylats werden nach Zugabe von 21,5 bis 22,6 Teilen Maleinsäureanhydrid und 0,3 Teilen Ätznatron in 3 Stunden bei 70 bis 80 °C unter Überlagerung mit Stickstoffgas verestert. Anschließend werden nah Verdünnen mit Wasser 29,6 bis 32,5 Teile Natriumsulfit als wäßrige Lösung bei 50 bis 60 °C innerhalb von 120 Minuten unter Rühren zugegeben. Nachdem der Ansatz klar wasserlöslich geworden ist, wird noch eine Stunde nachgerührt. Die Menge des zugesetzten Wassers kann zwischen 50 und 85 % der fertigen Lösung betragen.

**10a) Ester aus 6-Hydroxy-2-naphthoesäure + Ölsäuretriethanolaminester**

188 Teile 6-Hydroxy-2-naphthoesäure und 413 Teile eines handelsüblichen Ölsäuretriethanolaminmonoesters werden nach Zugabe von 1,5 Teilen p-Toluolsulfonsäure analog Beispiel 1a) bis zu einer Säurezahl von weniger als 25 verestert.

**10b) Oxethylat von 10a)**

200 Teile des Produkts 10a) werden nach Zugabe von einem Teil frischpulverisiertem Natriumhydroxid und 2 Teilen Natriummethylatlösung analog Beispiel 8b) mit 302 Teilen Ethylenoxid oxethyliert. Das erhaltene rotbraune, dickflüssige Oxethylat enthält im Mittel 20 Ethylenoxy-Einheiten pro Molekül und besitzt eine Hydroxyzahl von etwa 77. Das Endprodukt ist in Wasser stabil emulgierbar.

**11a) Ester aus 6-Hydroxy-2-naphthoesäure + Kolophoniumester**

188 Teile 6-Hydroxy-2-naphthoesäure und 376 Teile eines Monoesters aus einem handelsüblichen disproportionierten Kolophonium und Glycerin werden nach Zugabe von 13 Teilen p-Toluolsulfonsäure und 4 Teilen Zinnpulver analog Beispiel 5a) bis zu einer Säurezahl von weniger als 25 verestert.

**11b) Oxethylat von 11a)**

200 Teile des Produktes 11a) werden nach Zugabe von einem Teil rischpulverisiertem Natriumhydroxid und 3 Teilen Natriummethylat entsprechend Beispiel 8b) mit 468 Teilen Ethylenoxid umgesetzt. Das erhaltene braungrüne, flüssige Oxethylat enthält im Mittel 30 Ethylenoxyeinheiten pro Molekül und besitzt eine Hydroxyzahl von etwa 40..

**11c) Maleinsäurehalbester von 11b)**

300 Teile des nach 11b) erhaltenen Oxethylats werden nach Zugabe von 31,4 bis 34,5 Teilen Maleinsäureanhydrid und 0,5 Teilen Ätznatron 3 Stunden bei 70 bis 80 °C unter Stickstoffgas gerührt, anschließend mit Wasser verdünnt und mit Natronlauge neutral gestellt. Die Menge des zugesetzten Wassers kann zwischen 50 und 80 % der fertigen Lösung betragen.

**12) Phthalsäurehalbester von 11b)**

300 Teile Oxethylat 11b) werden nah Zugabe von 47,5 bis 52,8 Teilen Phthalsäureanhydrid und 0,56 Teilen Ätznatron 4,5 Stunden bei 70 bis 80 °C unter Stickstoffgasatmosphäre gerührt. Anschließend wird mit Wasser verdünnt und mit Natronlauge neutralisiert. Die Menge des zugesetzten Wassers kann zwischen 50 und 80 % der fertigen Produktlösung betragen.

**13a) Ester aus 6-Hydroxy-2-naphthoesäure + (Isononansäure + 6 EO)**

188 Teile 6-Hydroxy-2-naphthoesäure und 430 Teile eines Oxethylates aus einer handeslüblichen Isononansäure und 6 Moläquivalenten Ethylenoxid werden nach Zugabe von 15 Teilen p-Toluolsulfonsäure entsprechend Beispiel 1a) bis zu einer Säurezahl von weniger als 25 verestert.

**13b) 5-Kern-Novolakharz auf Basis von 13a)**

500 Teile des Produktes aus Beispiel 13a) werden nach Zugabe von 1,5 Teilen Dodecylbenzolsulfonsäure, gelöst in 10 Teilen Wasser, unter Überlagerung von Stickstoff und Erhöhung der Innentemperatur auf 100 bis 120 °C nach Zutropfen von 58,2 Teilen Formaldehyd (36 %ig in Wasser) entsprechend Beispiel 3b) bei gleichzeitiger Entfernung des Reaktionswassers kondensiert. Es werden etwa 510 Teile eines braunen, wachsfesten Novolakharzes erhalten.

**13c) Oxethylat von 13b)**

200 Teile Produkt aus 13b) werden analog Beispiel 1b) mit 206 Teilen Ethylenoxid umgesetzt. Das Oxethylat enthält insgesamt im Mittel 105 Ethylenoxy-Einheiten pro Molekül und besitzt eine Hydroxylzahl von etwa 45.

**14a) Ester aus 6-Hydroxy-2-naphthoesäure + (Fettalkohol + 6 EO)**

188 Teile 6-Hydroxy-2-naphthoesäure und 462 Teile eines handelsüblichen $C_{12}$-$C_{14}$-Fettalkohols mit 6 Mol Ethylenoxid werden nach Zugabe von 1,3 Teilen p-Toluolsulfonsäure analog Beispiel 4a) bis zu einer Säurezahl von weniger als 40 verestert.

**14b) 5-Kern-Novolakharz auf Basis von 14a)**

500 Teile des Produktes aus Beispiel 14a) werden analog Beispiel 3b) mit 52,4 Teilen Butyraldehyd versetzt und nach Zugabe von 3 Teilen konzentrierter Salzsäure 15 Stunden bei 110 °C Innentemperatur kondensiert.

**14c) Oxethylat von 14b)**

200 Teile des nach 14b) erhaltenen Novolaks werden analog Beispiel 8b) nach Zugabe von 1,5 Teilen 30 %iger methanolischer Natriummethylatlösung in einem Druckgefäß bei 150 bis 160 °C Innentemperatur mit 290 Teilen Ethylenoxid umgesetzt. Das erhaltene zähflüssige Oxethylat enthält im Mittel 100 Ethylenoxy-Einheiten pro Molekül und besitzt eine Hydroxylzahl von etwa 30.

**14d) Sulfobernsteinsäurehalbester von 14c)**

500 Teile des nach 14c) erhaltenen Oxethylats werden analog Beispiel 9c) mit 26,2 bis 28,8 Teilen Maleinsäureanhydrid und 33,7 bis 37,0 Teilen Natriumsulfit unter Zusatz von Wasser umgesetzt. Die Menge des zugesetzten Wassers kann zwischen 50 und 85 % der fertigen Produktlösung betragen.

**15a) Ester aus 6-Hydroxy-2-naphthoesäure + (Talgfettsäure + 10 EO)**

188 Teile 6-Hydroxy-2-naphthoesäure und 709 Teile eines Oxethylats aus einer handelsüblichen Talgfettsäure und 10 Moläquivalenten Ethylenoxid werden nach Zugabe von 1,5 Teilen p-Toluolsulfonsäure analog Beispiel 1a) bis zu einer Säurezahl von etwa 25 verestert.

**15b) 3-Kern-Novolakharz auf Basis von 15a)**

500 Teile Produkt aus Beispiel 15a) werden vorgelegt und unter langsamen Rühren bei Raumtemperatur mit 15,5 Teilen Paraformaldehyd versetzt. Unter Stickstoffgas läßt man eine Stunde bei 50 °C rühren, erhöht dann die Innentemperatur auf 90 °C und läßt 5,6 Teile konzentrierte Salzsäure zutropfen. Danach läßt man bei 110 °C 6 Stunden lang unter Durchleiten von Stickstoff rühren, erhöht anschließend die Innentemperatur auf 135 bis 140 °C und destilliert in 4 Stunden das Reaktionswasser ab. Dann wird der Druck auf 20 bis 30 mbar reduziert und 2 Stunden bei 135 bis 140 °C nachgerührt. Man erhält etwa 490 Teile eines dunkelbraunen, festen Harzes.

**15c) Ethylenoxid/Propylenoxid-Addukt an 15b)**

400 Teile Novolakharz 15b) werden nach Zugabe von 4,5 Teilen 30 %iger methanolischer Natriummethylatlösung in einem Druckgefäß nach Abziehen des Methanols unter Rühren und Zuführen von 477 Teilen Propylenoxid und 562 Teilen Ethylenoxid bei 145 bis 160 °C unter Aufrechterhalten eines Drucks von etwa 3,4 bis 5 bar oxalkyliert. Nachdem alles Alkylenoxid aufgedrückt worden ist, wird 1 Stunde bei 150 bis 160 °C nachgerührt. Das Oxalkylat enthält insgesamt im Mittel 45 Propylenoxy-Einheiten und 69,8 Ethylenoxy-Einheiten pro Molekül und besitzt eine Hydroxylzahl von etwa 23.

**15d) Sulfobernsteinsäurehalbester von 15c)**

500 Teile Oxalkylat 15c) werden nach Zugabe von 20,9 bis 22,1 Teilen Maleinsäureanhydrid und 0,5 Teilen Ätznatron analog Beispiel 2b) verestert. Anschließend wird mit Wasser verdünnt und 26,8 bis 29,5 Teilen Natriumsulfit als wäßrige Lösung bei 70 bis 80 °C innerhalb von 20 Minuten zugegeben, bis de Ansatz klar löslich geworden ist. Anschließend wird eine Stunde nachgerührt. Die Menge des zugesetzten Wassers beträgt vorzugsweise zwischen 50 bis 85 % der fertigen Lösung des Produktes.

**16a) Ester aus 6-Hydroxy-2-naphthoesäure + Harzalkohol**

188 Teile 6-Hydroxy-2-naphthoesäure und 290 Teile eines handelsüblichen Dihydroabietylalkohols werden nach Zugabe von 1 Teil p-Toluolsulfonsäure udn 4 Teilen Zinnpulver analog Beispiel 5a) bis zu einer Säurezahl von weniger als 35 verestert.

**16b) Oxethylat von 16a)**

200 Teile Produkt aus 16a) werden nach Zugabe von 1,5 Teilen Natriummethylatlösung entsprechend Beispiel 9b) in einem Druckgefäß bei 150 bis 160 °C Innentemperatur mit 460 Teilen Ethylenoxid umgesetzt. Das erhaltene zähflüssige Oxethylat enthält 25 Ethylenoxy-Einheiten pro Molekül und besitzt eine Hydroxylzahl von etwa 40.

**16c) Sulfobernsteinsäurehalbester von 16b)**

300 Teile des nach 16b) erhaltenen Oxethylats werden analog Verbindung 2b) mit 21,0 bis 23,1 Teilen Maleinsäureanhydrid bei 70 bis 80 °C und 27,0 bis 29,8 Teilen Natriumsulfit als wäßrige Lösung umgesetzt. Die Menge des zugesetzten Wassers beträgt vorzugsweise zwischen 50 und 85 % der fertigen Lösung des Produktes.

**17) Phthalsäurehalbester-triethanolamin-Salz von 16b)**

300 Teile des nach Beispiel 16b) erhaltenen Ester-oxethylats werden nach Zugabe von 0,5 Teilen Ätznatron mit 31,7 Teilen Phthalsäureanhydrid 4 Stunden bei 80 bis 90 °C unter Stickstoffgas gerührt, anschließend mit Wasser verdünnt und mit 32 Teilen Triethanolamin neutralisiert. Die Menge des zugesetzten Wassers beträgt vorzugsweise zwischen 50 und 80 % der fertigen Lösung des Produktes.

**18a) Ester aus 6-Hydroxy-2-naphthoesäure + (Ölsäure + 6 EO)**

188 Teile 6-Hydroxy-2-naphthoesäure und 546 Teile handelsübliches Addukt aus Ölsäure und 6 Moläquivalenten Ethylenoxid werden analog Beispiel 1a) bis zu einer Säurezahl von weniger als 40 verestert.

**18b) 5-Kern-Novolakharz auf Basis von 18a)**

500 Teile Produkt aus 18a) werden analog Beispiel 3b) nach Zugabe von 2 Teilen Dodecylbenzolsulfonsäure, gelöst in 12 Teilen Wasser mit 51,2 Teilen Formaldehyd (36 %ig in Wasser) und Abdestillieren des Reaktionswassers innerhalb von 10 Stunden kondensiert. nach dem Erkalten erhält man ein braunes, wachsfestes Novolakharz (Ausbeute etwa 495 Teile).

**18c) Oxethylat von 18b)**

200 Teile 5-Kern-Novolakharz 18b) werden analog Beispiel 3c) mit 523 Teilen Ethylenoxid umgesetzt. Das Produkt enhält im Mittel 215,7 Ethylenoxy-Einheiten pro Molekül und besitzt eine Hydroxylzahl von etwa 65.

**18d) Benzoesäureteilester von 18c)**

300 Teile des nach 18c) erhaltenen Oxethylats und 17,1 Teile Benzoesäure werden nach Zugabe von 150 Teilen Xylol und 1,5 Teilen Toluolsulfonsäure unter Überlagerung von Stickstoff gut gemischt und innerhalb von 8 Stunden bei 155 bis 160 °C unter Auskreisen des Reaktionswassers bis zu einer Säurezahl

von weniger als 10 verestert. Die Hydroxyzahl des Teilesters beträgt 39.

**19) Benzoesäure/Sulfobernsteinsäure-Mischester von 18c)**

210 Teile Benzoesäureteilester 18d) werden analog Beispiel 3d) mit 20,4 bis 22,4 Teilen Maleinsäurenanhydrid und einer Lösung von 26,3 bis 28,9 Teilen Natriumsulfit in 390 Teilen Wasser zum Sulfobernsteinsäurehalbester umgesetzt. Die Menge des zugesetzten Wassers beträgt vorzugsweise 50 bis 85 % der fertigen Lösung des Produktes.

**20) Ester aus 6-Hydroxy-2-naphthoesäure + (Kolophonium + 15 EO)**

188 Teile 6-Hydroxy-2-naphthoesäure werden analog Beispiel 5a) nach Zugabe von 2 Teilen p-Toluolsulfonsäure und 6 Teilen Zinnpulver mit 1404 Teilen eines Oxethylats aus disproportioniertem Kolophonium und 15 Moläquivelenten Ethylenoxid bis zu einer Säurezahl von weniger als 31 verestert. Das Produkt ist in Wasser stabil emulgierbar und zur Azokupplung geeignet.

**21) Ester aus 3-Hydroxy-2-naphthoesäure + (Tallölfettsäure + 25 EO)**

188 Teile 3-Hydroxy-2-naphthoesäure werden analog Beispiel 1a nach Zugabe von 1,5 Teilen p-Toluolsulfonsäure mit 1382 Teilen eines Oxethylats aus einer handeslüblichen Tallölfettsäure und 25 Teilen Ethylenoxid bis zu einer Säurezahl >35 verestert. Das Produkt ist in Wasser stabil emulgierbar und läßt sich mit Diazoniumsalzen kuppeln.

**22) Ester aus 3-Hydroxy-2-naphthoesäure + (Talgfettpropylendiamin + 20 EO)**

188 Teile 3-Hydroxy-2-naphthoesäure werden analog Beispiel 1a) nach Zugabe von 2,5 Teilen p-Toluolsulfonsäure mit 1256 Teilen eines Oxethylats aus einem Talgfettpropylendiamin und 20 Moläquivalenten Ethylenoxid bis zu einer Säurezahl von weniger als 25 verestert. Das tensidische Produkt ist in Wasser stabil emulgierbar und besitzt kupplungsfähige Eigenschaften.

**23) Hydroxynaphthoesäureester von 3c)**

500 Teile 5-Kern-Novolak-oxethylat nach Beispiel 3c) werden nach Zugabe von 5 Teilen p-Toluolsulfonsäure mit 18,4 Teilen 3-Hydroxy-2-naphthoesäure bis zu einer Säurezahl von weniger als 20 verestert. Das tensidische Produkt ist in Wasser klar löslich und besitzt kupplungsfähige Eigenschaften.

**24) Schwefelsäureester von 18c)**

300 Teile des nach 18c) erhaltenen Oxethylats werden mit 250 Volumenteilen Methylenchlorid verdünnt und mit 40,5 Teilen Chlorsulfonsäure bei 15 bis 20 °C versetzt, wobei man trockenen Stickstoff in schwachem Strom durch die Lösung leitet und damit das entweichende Chlorwasserstoffgas über einen Rückflußkühler entfernt. Gegen Ende der Reaktion wird auf 30 °C erwärmt und gerührt, bis kein Chlorwasserstoffgas mehr entweicht. Nach Abdestillieren des Methylenchlorids unter vermindertem Druck bei 30 °C wird nach Zugabe von 500 Teilen Wasser mit 29 Teilen 33 %iger Natronlauge neutralisiert. Die Menge des zugesetzten Wassers beträgt vorzugsweise 50 bis 85 % der fertigen Lösung des Produkts.

**25) Ester aus 6-Hydroxy-2-naphthoesäure + (dimerisierte Fettsäure + 25 EO)**

300 Teile einer handelsüblichen dimerisierten Fettsäure mit 22 Gewichtsanteilen an trimerisierter Fettsäure ((R) Pripol 1017) werden in Gegenwart von 1,5 Teilen frisch pulverisiertem Ätznatron bei 140 bis 160 °C Innentemperatur und einem Druck von 3 bis 5 bar mit 381 Teilen Ethylenoxid unter Stickstoffatmosphäre umgesetzt. Nach Neutralisieren mit Essigsäure und Zugabe von 3 Teilen p-Toluolsulfonsäure, 150 Volumenteilen Xylol und 65 Teilen 6-Hydroxy-2-naphthoesäure wird 10 bis 12 Stunden auf 155 bis 165 °C erhitzt und das Reaktionswasser durch Auskreisen entfernt. Nach Abdestillieren des Xylols läßt man noch 2 Stunden bei 200 bis 230 °C nachrühren. Der erhaltene Ester hat eine Säurezahl von weniger als 20 und besitzt kupplungsfähige Eigenschaften.

**26a) Oxethylat von 25)**

200 Teile Ester aus 25) werden analog Beispiel 1b) mit 62 Teilen Ethylenoxid umgesetzt. Das Oxethylat enthält insgesamt im Mittel 40 Ethylenoxy-Einheiten pro Molekül und besitzt eine Hydroxylzahl von etwa 62.

**26b) Sulfobernsteinsäurehalbester von 26a)**

250 Teile des nach 26a) erhaltenen Oxethylats werden analog Beispiel 9c) mit 27 bis 28,4 Teilen Maleinsäureanhydrid und 34,7 bis 36,4 Teilen Natriumsulfit unter Zusatz von Wasser umgesetzt. Die Menge des zugesetzten Wassers kann zwischen 50 bis 85 % der fertigen Lösung des Produkts betragen.

**27a) Ester aus dimerisierter Fettsäure und Triethanolamin**

300 Teile dimerisierte Fettsäure entsprechend Beispiel 25) werden analog Beispiel 1a) mit 103 Teilen Triethanolamin in Gegenwart von 1,5 Teilen p-Toluolsulfonsäure bis zu einer Säurezahl von 5,6 verestert.

**27b) Oxethylat von 27a)**

300 Teile Fettsäuretriethanolaminester 27a) werden nach Zugabe von 5 Teilen 30 %iger methanolischer Natriummethylatlösung analog Beispiel 8b) mit 247,5 Teilen Ethylenoxid umgesetzt. Das Oxethylat enthält 18 Ethylenoxy-Einheiten pro Molekül und besitzt eine Hydorxylzahl von etwa 128.

**27c) Ester aus 6-Hydroxy-2-naphthoesäure + (Dimersäure-triethanolaminester + 12 EO)**

400 Teile Ester 27a) werden analog Beispiel 1a) mit 50,3 Teilen 6-Hydroxy-2-naphthoesäure in Gegenwart von 1,5 Teilen p-Toluolsulfonsäure bis zu einer Säurezahl von weniger als 25 verestert.

**27d) Oxethylat von 27c)**

400 Teile Ester 27c) werden nach Zugabe von 1,3 Teilen frisch pulverisiertem Ätznatron analog Beispiel 4b) mit 210 Teilen Ethylenoxid umgesetzt. Das Oxethylat enthält insgesamt 38 Ethylenoxy-Einheiten pro Molekül und besitzt eine Hydroxyzahl von etwa 60.

## Ansprüche

1. Verbindung der allgemeinen Formel (I)

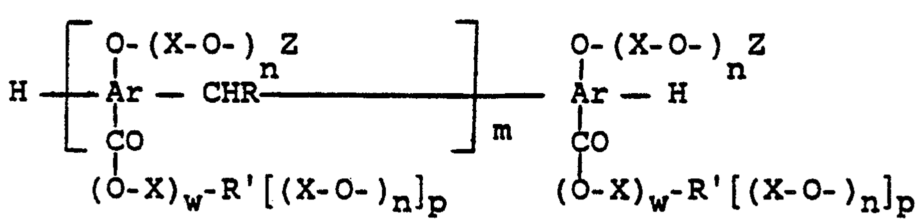

(I),

worin
Ar Naphthalin,
X unabhängig voneinander 1,2-Ethylen oder 1,2 Propylen, oder eine Kombination davon,
n und w unabhängig voneinander eine Zahl von 0 bis 200, wobei mindestens eine der Zahlen n und w von 0 verschieden ist,
Z jeweils unabhängig von den übrigen Z ein Wasserstoffatom oder ein anionogener, nichtionogener oder kationogener aliphatischer, cycloaliphatischer, aromatischer, araliphatischer oder arcycloaliphatischer Acylrest mit 1 bis 60 C-Atomen oder eine Gruppe der Formel $-SO_3M$, in der M ein Kation bedeutet,
R unabhängig von den übrigen R ein Wasserstoffatom oder ein Alkylrest mit 1 bis 9 C-Atomen,
R′ unabhängig von den übrigen R′ ein Amin- bzw. Amid-Stickstoffatom oder ein aliphatischer, cycloaliphatischer oder aromatischer Rest oder eine Kombination aus zwei oder mehreren solcher KW-Reste, wobei der Rest R′ insgesamt 1 bis 60 C-Atome hat sowie mit den angrenzenden X und - wenn w = 0 ist - mit der CO-Gruppe über jeweils ein Sauerstoff-oder Amin- bzw. Amid-Stickstoffatom gebunden ist,
p unabhängig von den übrigen p eine Zahl von 0 bis 6 und
m eine Zahl von 0 bis 9
sind.

2. Verbindung nach Anspruch 1, dadurch gekennzeichnet, daß
Ar Naphthalin,
Z unabhängig voneinander ein Wasserstoffatom oder ein anionogener oder nichtionogener aliphatischer, cycloaliphatischer, aromatischer oder araliphatischer Acylrest mit insgesamt 1 bis 40 C-Atomen oder eine Gruppe der Formel $-SO_3M$, in der M ein Kation bedeutet,
R ein Wasserstoffatom oder ein $C_1$-$C_6$-Alkylrest,
R′ unabhängig voneinander jeweils ein aliphatischer, cycloaliphatischer, aromatischer, araliphatischer oder arcycloaliphatischer Rest mit 1 bis 40 C-Atomen, der mit den angrenzenden X und - wenn w = O ist - mit der CO-Gruppe über ein Sauerstoff- oder Amin- bzw- Amid-Stickstoffatom gebunden ist,
p unabhängig voneinander jeweils 0 bis 3,
m 0 bis 4,
X 1,2-Ethylen oder 1,2-Propylen und
n unabhängig voneinander jeweils 1 bis 100
sind.

3. Verbindung nach Anspruch 1 oder 2, dadurch gekennzeichnet, daß sie mindestens einen nichtionogenen oder anionogenen Acylrest Z aus de Gruppe entsprechend den folgenden Strukturen
$-CO-R^1$,
$-CO-CH=CH-COOM$,
$-CO-CH_2-CH(SO_3M)-COOM$,
$-CO-C_6H_4-COOM$
$-CO-R^*[-COOM]_k$ und
$-SO_3M$,
enthält, wobei in den vorstehenden Formeln
$R^1$ für einen gesättigten oder ungesättigten, geradkettigen oder verzweigten Kohlenwasserstoffrest mit 1 bis 19 C-Atomen, der unsubstituiert oder durch eine Hydroxygruppe substituiert ist, vorzugsweise einen geradkettigen, gesättigten oder ungesättigten $C_7$-$C_{19}$-Alkylrest einer Fettsäure oder Hydroxyfettsäure mit 8 bis 20 C-Atomen, oder
für einen Phenyl- oder Naphthylrest, der unsubstituiert oder ein- bis dreifach durch Reste aus der Gruppe von $C_1$-$C_{14}$-Alkyl, Benzyl, Phenylethyl, $C_1$-$C_4$-Alkoxy, $C_1$-$C_4$-Alkanoyl, Carbamoyl, Phenyl, Mono- oder Di-($C_1$-$C_4$-alkyl)-amino-carbonyl und Hydroxyl substituiert ist, oder
für einen polycyclischen Kohlenwasserstoffrest einer unmodifizierten oder modifizierten Harzsäure, vorzugsweise einer Harzsäure vom Kolophoniumtyp,
$R^*[-COOM]_k-CO-$ für eine Acylrest einer dimerisierten oder trimerisierten Fettsäure auf Basis von $C_{12}$-$C_{20}$-Fettsäuren, wobei $R^*$ den Kohlenwasserstoffteil des Acylrestes bedeutet und k entsprechend 1 oder 2 ist, und
M für jeweils ein Kation, vorzugsweise für $H^+$ oder ein Alkalimetallkation oder ein Äquivalent eines Erdalkalimetallkations oder Ammonium oder ein Ammoniumion, das durch mindestens einen Rest aus der Gruppe $C_1$-$C_4$-Alkyl oder $C_1$-$C_4$-Hydroxyalkyl substituiert ist, oder ein Ammoniumion, das durch Anlagerung von 1 bis 150 Mol-Äquivalenten Ethylenoxid oder Propylenoxid oder eines Gemisches aus beiden Alkylenoxiden an Ammoniak oder an ein Amin, das einem der vorstehend genannten Ammoniumionen entspricht, erhältlich ist, stehen.

4. Verbindung nach einem oder mehreren der Ansprüche 1 bis 3, dadurch gekennzeichnet, daß sie

mindestens einen Rest $-R'[X-O-)_nZ]_p$ aus der Gruppe entsprechend den folgenden Strukturen
$-O-CO-R^1$,
$-O-R^2$,
$-NR^3-R^2$,
$-NR^3-CO-R^1$,
$-O-CH_2-[CHOR^3-]_qCH_2-O-CO-R^1$,
$-O-CH_2[CHOR^3-]_qCH_2-O-R^2$,
$-O-CH_2-C[CH_2OR^3]_2-CH_2-O-CO-R^1$,
$-(NR^3-C_iH_{2i}-)_rNR^3-R^2$,
$-NR^3-(X-O)_nCO-R^1$,
$-O-CO-R^*[-CO(X-O-)_nZ]_k$ und
$-OR^4$
enthalt, wobei in den vorstehenden Formeln X, Z, n, $R^1$, $R^*$ und k die in den vorhergehenden Ansprüchen genannten Bedeutungen haben und
$R^2$ für einen gesättigten oder ungesättigten,geradkettigen oder verzweigten Kohlenwasserstoffrest mit 1 bis 20 C-Atomen, vorzugsweise für einen geradkettigen, gesättigten oder ungesättigten $C_8$-$C_{20}$-Alkylrest auf Basis eines Fettalkohols,
$R^3$ für Wasserstoff, $C_1$-$C_4$-Alkyl oder eine Gruppe der Formel $(X-O)_nZ$ mit den genannten Bedeutung für X, Z und n,
$R^4$ für Phenyl oder Naphtyl, die unsubstituiert oder ein-bis dreifach durch Reste aus der Gruppe von $C_1$-$C_{14}$-Alkyl substituiert sind,
q für 1 bis 4, vorzugsweise 1,
r für 1 bis 6, vorzugsweise 1 ode 2 und
i für 1 bis 6, vorzugsweise 3,
stehen.

5. Verbindung nach einem oder mehreren der Ansprüche 1 bis 4, dadurch gekennzeichnet, daß Z aus der Gruppe entsprechend den folgenden Strukturen
H, $-CO-CH=CH-COOM$, $-CO-CH_2-CH(SO_3M)-COOM$, $-CO-C_6H_4-COOM$, $-CO-C_6H_5$ sowie dem Acylrest der Dehydroabietinsäure stammt, wobei mindestens ein Rest Z von H verschieden ist, und die Reste $-R'[(X-O-)_nZ]_p$ aus der Gruppe entsprechend den folgenden Strukturen
$-O-CO-R^1$,
$-O-R^2$,
$-NR^3-R^2$,
$-NR^3-CH_2CH_2-O-CO-R^1$,
$-CH_2-CH[O-(X-O-)_nZ]-CH_2-O-CO-R^1$ und
$-NR^3-CH_2CH_2CH_2-NR^3-R^2$
ausgewählt sind, wobei in den vorstehenden Formeln $R^1$, $R^2$, X und Z die in den vorhergehenden Ansprüchen genannten Bedeutungen haben, und
$R^3$ für Wasserstoff oder $(X-O-)_nZ$,
n für 2 bis 50, insbesondere 2 bis 20,
w für 0 bis 100, insbesondere 1 bis 50, und
M für ein Kation aus der Gruppe von $H^+$, ein Alkalimetallkation, ein Äquivalent eines Erdalkalimetallkations, Ammonium oder eine Ammoniumgruppe, die durch niederes Alkyl substituiert ist und die durch Anlagerung von bis zu 100 Mol-Äquivalenten Ethylenoxid oder Propylenoxid oder eines Gemisches aus beiden Alkylenoxiden an Ammoniak oder niedere Alkylamine erhältlich ist,
stehen.

6. Verbindung nach einem oder mehreren der Ansprüche 1 bis 5, dadurch gekennzeichnet, daß m = 0 ist.

7. Verbindung nach einem oder mehreren der Ansprüche 1 bis 5, dadurch gekennzeichnet, daß p = 0 und m = 1 bis 9, vorzugsweise 1 bis 4, insbesondere 1 oder 2, ist.

8. Verbindung nach einem oder mehreren der Ansprüche 1 bis 7, dadurch gekennzeichnet, daß die Summe (n+w) aller Alkylenoxy-Einheiten pro Naphthalin Ar insgesamt 2 bis 150, vorzugsweise 6 bis 150, beträgt.

9. Verfahren zur Herstellung einer nach einem oder mehreren der Ansprüche 1 bis 8 definierten Verbindung der allgemeinen Formel (I), dadurch gekennzeichnet, daß man Hydroxynaphthalincarbonsäuren der Formel HO-Ar-COOH durch Behandlung mit Verbindungen der Formel (II)
$H(-O-X)_w-R'[(X-O-)_nZ]_p$ (II),
in denen Ar, X, R', Z, w, n und p die bei der Erläuterung von Formel (I) in den vorhergehenden Ansprüchen

genannten Bedeutungen haben und wobei vorzugsweise Z Wasserstoff oder p = O ist, an der Carboxylgruppe der Hydroxynaphthalin-carbonsäuren verestert,
das so erzeugte Veresterungsprodukt - ohne weitere Isolierung oder nach Zwischenisolierung - gewünschtenfalls mit einem Aldehyd der Formel RCHO, in der R die bereits genannte Bedeutung hat, oder mit einer reaktionsfähigen Verbindung, welche einen entsprechenden Aldehyd freisetzt, unter Bildung eines Novolakharzes mit 2 bis 10 Kernen im Molekül kondensiert,
dieses Novolakharz bzw. das schon zuvor erwähnte Veresterungsprodukt mit Ethylenoxid oder Propylenoxid oder mit einem Gemisch aus beiden Alkylenoxiden oxalkyliert, wobei Polyglykoletherketten an den Hydroxygruppen, die an Naphthalinkernen gebunden sind, sowie gegebenenfalls an noch vorhandenen weiteren Hydroxygruppen oder an reaktionsfähigen Wasserstoff aufweisenden Aminogruppen, die von der Verbindung der Formel (II) stammen, eingeführt, werden,
und man schließlich die endständigen Hydroxygruppen des erhaltenen Oxalkylats unmodifiziert läßt oder teilweise bzw. vollständig mit Säuren der Formel Z-OH, worin Z die bereits genannte Bedeutung hat, oder mit deren reaktionsfähigen Derivaten in ein oder mehreren Stufen umsetzt.

10. Verfahren nach Anspruch 9, dadurch gekennzeichnet, daß die weitere Modifizierung der endständigen Hydroxygruppen an den Polyglykoletherketten durch nichtionogene oder kationogene Acylreste Z unter Veresterung der zugrundeliegenden oxalkylierten Hydroxynaphthalincarbonsäureester bzw. der entsprechenden Novolakharze erfolgt.

11. Verfahren nach Anspruch 9 oder 10, dadurch gekennzeichnet, daß die weitere Modifizierung der endständigen Hydroxygruppen an den Polyglykoletherketten durch anionogene Acylreste Z unter Umsetzung der zugrundeliegenden oxalkylierten Hydroxynaphthalincarbonsäureester bzw. der entsprechenden Novolakharze, oder von solchen bereits partiell durch nichtionogene oder kationogene Acylreste Z veresterten oxalkylierten Hydroxynaphthalincarbonsäureestern bzw. von entsprechenden Novolakharzen, sofern letztere noch freie Hydroxygruppen aufweisen, mit den Sulfatorest liefernden Verbindungen erfolgt.

12. Verfahren nach Anspruch 9 oder 10, dadurch gekennzeichnet, daß die weitere Modifizierung der endständigen Hydroxygruppen an den Polyglykoletherketten durch anionogene Acylreste Z unter Umsetzung der zugrundeliegenden oxalkylierten Hydroxynaphthalincarbonsäureester bzw. der entsprechenden Novolakharze, oder von solchen bereits partiell durch nichtionogene oder kationogene Acylreste Z veresterten oxalkylierten Hydroxynaphthalincarbonsäureestern bzw. von entsprechenden Novolakharzen, sofern letztere noch freie Hydroxygruppen aufweisen, mit Dicarbonsäuren oder Polycarbonsäuren oder deren Anhydride zu den entsprechenden Halbestern erfolgt.

13. Verfahren nach Anspruch 12, dadurch gekennzeichnet, daß im Falle von in die oxalkylierten Hydroxynaphthalincarbonsäureester bzw. in die entsprechenden Novolakharze als anionogenen Acylrest Z eingeführten Maleinsäurehalbestergruppen die letzteren nachträglich durch Umsetzung mit Sulfiten oder Hydrogensulfiten in die entsprechenden Sulfobernsteinsäurehalbester überführt werden.

14. Verwendung einer nach einem oder mehreren der Ansprüche 1 bis 8 definierten Verbindung als grenzflächenaktives Mittel.

15. Verwendung nach Anspruch 14 als Dispergiermittel, Emulgiermittel, Kupplungshilfsmittel, Präparationsmittel für Feststoffe, Flotationshilfsmittel, Egalisier- oder Färbereihilfsmittel.

16. Verwendung nach Anspruch 15 als Dispergiermittel zur Herstellung von Dispersionen von Pigmenten, Farbstoffen und optischen Aufhellern, als Emulgator zur Herstellung von Metallbearbeitungsmitteln, Carrieremulsionen und Chemischreinigungsverstärkern sowie als Formulierungsmittel für Pigmentpräparationen und Schädlingsbekämpfungsmittel.